# EUROPEAN PATENT SPECIFICATION

(11) **EP 2 344 312 B1**
(45) Date of publication and mention of the grant of the patent: **05.09.2012**
(21) Application number: 09780271.4
(22) Date of filing: 07.07.2009
(51) Int. Cl.: B28B 11/24, B28B 7/34, C04B 26/02, C04B 28/00, B29C 70/54

(54) **A HEATED MOULD FOR MOULDING POLYMERIC COMPOSITES, A METHOD FOR MAKING SUCH MOULD AND ITS USE**
ERWÄRMTE FORM ZUM FORMEN VON POLYMEREN VERBUNDSTOFFEN, VERFAHREN ZU SEINER HERSTELLUNG UND SEINE BENUTZUNG
MOULE CHAUFFÉ POUR MOULER DES COMPOSITES POLYMÈRES, SON PROCÉDÉ DE FABRICATION ET SON UTILISATION

(30) Priority: 10.10.2008 IE 20080826; 31.03.2009 IE 20090248
(43) Date of publication of application: 20.07.2011
(73) Proprietor: Eirecomposites Teoranta, Co. Galway (IE)
(72) Inventor: DOYLE, Adrian, Galway (IE); FEERICK, Patrick, Co. Galway (IE); MALLON, Patrick, Limerick (IE); O'BRADAIGH, Conchur, Galway (IE); DOYLE, Derrick, Roscommon (IE)
(74) Representative: De Groote, Christophe
(86) International application number: PCT/EP2009/058619
(87) International publication number: WO 2010/040576

(56) References cited:
- WO-A-00/54949
- US-A1- 2008 185 749

## Description

### Field of the Invention

The present invention relates to a mould suitable for high temperature moulding of polymeric composites, such as thermoplastic and thermosetting composite components. The mould can be used in the manufacture of composite articles, such as wind turbine blades. A process for the manufacture of larger structural elements or articles of manufacture is described which are generally considered to be more difficult to manufacture than smaller wind turbine blades, for example. Examples of such components include wind turbine blades, sections of aeroplane fuselage, marine structures such as boat hulls, and large automotive and transport panels, enclosures or containers.

### Background of the Invention

Composite and plastic materials are used to fabricate products using various moulding techniques and devices. The process of fabricating composite and plastic materials usually requires that heat be supplied to the product material which results in that material assuming the form of a mould surface. The heating may also activate chemical curing or polymerisation or some other desired chemical or morphological change in the material.

The heating may be provided by, for example, autoclaves and platen presses. These methods often result in lengthy cycle times to achieve the required temperature profile for the part being fabricated and thus the thermal processing cycles are usually defined by the mould and equipment limitations rather than the optimum cycle for the material being processed. As the size of the composite component being processed exceeds certain limits, the cost of autoclaves and presses can become prohibitive.

The manufacture of very large composite articles, such as wind turbine blades, for example, involves a number of technical difficulties. These problems are amplified by the length of the blade.

Furthermore, composite moulds that are generally used in the art, are not strong enough to be safely manipulated and cannot endure repeated high temperature processes which are used in the production of composite articles. Metal moulds are unsuitable for the manufacture of very large composite articles at elevated temperatures because they are not usable due to the mismatch of the coefficient of thermal expansion between the mould and composite materials processed therein. Furthermore, known ceramic moulds are generally not strong enough to withstand manipulation. For example, a large ceramic mould would tend to collapse once vacuum pressure for processing the composite is applied to it, for example.

Accordingly, there is a need for an improved mould with internal heating for use in processing large composite articles or parts thereof.

An object of the present invention is to provide a mould suitable for processing large composite components which has a high strength and an efficient heating arrangement.

In recent times, there has been significant research and development in the area of renewable energy. In particular, much research has been focussed on wind energy and processes for its generation. Of particular interest within the present invention are blades which are suitable for use with wind power, generally those of the type which are employed to convert natural wind energy into sufficient rotational energy to drive a turbine. Such blades are shaped to capture natural wind energy and generate a rotational movement from the natural wind energy. The rotational motion is used to drive a generator, which in turn generates electricity. The blades are generally foils which translate kinetic wind energy into mechanical energy. Such blades are often referred to as wind turbine blades.

Processes for the manufacture of composite articles such as wind turbine blades are well known in the art. Large composite articles such as large wind turbine blades have generally been made from one of three processes: hand layup; pre-impregnated tape and some form of liquid resin infusion process into a dry fibre and core preform. Generally, a turbine blade is made in two concave shell halves where the concave surfaces face each other with a structural support such as a spar-box or spars in the cavity between the two fitted halves. Where the blade connects to the hub, the section (generally referred to as the root section) is a cylindrical monolithic composite laminate and is generally manufactured separately. The entire assembly is then adhesively bonded in an extra operation, a process which can be complex and time-consuming.

The most basic method of production of a large composite structure is to use hand lay-up of glass fibre and uncured thermoset resins such as epoxy and polyester. This involves the manual application of alternating layers of glass fibre and resin, with brushes and rollers being used to manually apply some pressure to the layup in order to remove air pockets and to ensure that the resin has infiltrated the reinforcement. The main advantage of this process is that it is inexpensive, as there is no sophisticated equipment needed. The blade tooling can be unheated, or possibly heated, for example up to 80°C, in order to initiate the curing reaction. The main disadvantage of the hand lay up process is that it is dirty and difficult to control laminate quality. There are significant health and safety issues associated with the use of uncured resins in the workplace. In general, this type of process for large composite structures is gradually being replaced by the liquid resin infusion processes or the use of pre-impregnated tape.

The use of pre-impregnated tape is a more advanced manufacturing process than hand lay-up. In wind turbine blades the tape is usually made of glass fibre reinforced epoxy, but carbon fibre reinforced epoxy may also be used in spars in particular. The tape is laid up by hand, or automatically laid-up onto a tool having the shape of one half section of the shell of the blade. The entire layup is then encapsulated in a vacuum bag and the air evacuated. The tool is then heated in order to cure the resin, normally to a temperature above 100°C, for a number of hours, which could be between 4 and 8 hours, depending on the size of the blade. The same operation is carried out with the other half section of the shell of the blade on a separate tool. The spar and root section are made on third and fourth tools respectively, separate from the half sections of the shell of the blade.

In all, the entire process, including part manufacture and adhesive bonding, can take between 24 hours and 36 hours to fully produce a large, e.g. >40m long, wind turbine blade from its separate parts (i.e. half sections of the shell, spars and root section). In order to substantially reduce this lengthy manufacturing cycle for wind turbine blades, the most promising technique is to develop some form of a one-shot process where the entire blade is produced in one operation. The use of.a one-shot process avoids the need for adhesive bonding and assembly of halves and spars. A one-shot process leads to a weight reduction in the blade as the adhesive and gap filler materials are not needed. The process cycle time is also reduced due to a number of manufacturing and assembly steps being removed. One-shot processing of wind turbine blades is also advantageous in that it is possible to achieve a better moulded defmition of the trailing edge of the blade, giving better aerodynamics and much lower noise from the operation of the turbines.

EP 1 310 351 B1 of Siemens AG and corresponding US 2003/0116262 A1 (assignee Bonus Energy A/S) describe a method for producing a thermoset composite wind turbine blade as a single moulding, using a liquid resin infusion process. In this process the reinforcing fibrous materials together with core materials used to produce sandwich structures are placed in the closed mould. Subsequently the liquid resin is infused into the fibrous materials through the application of a vacuum. In one embodiment of the process described in EP 1 310 351, thermoset prepreg material is placed in high load bearing sections of the blade to take advantage of the high fibre volume fraction that these prepreg materials provide. The remaining dry fibrous materials which constitute the greater part of the blade are infused with the liquid resin under the application of vacuum. Specially-constructed mould cores that have a flexible external part and a firm or workable interior, are left in the mould during infiltration and cure, and then removed afterwards. The cores must be left in place during processing as the resin infiltration process described necessitates a reduction in vacuum pressure during infiltration. As vacuum pressure is the only external force acting to support the composite layup during processing, the cores must be left in place to stop the assembly collapsing due to the weight of the material.

It is not a simple process, however, to liquid infuse a large thermoset composite wind turbine blade in a single-shot. EP 1 310 351 B 1 and US 2003/0116262 A 1 describe an intricate system of resin supply pipes which are used to distribute the many tonnes of resin through the sandwich core of the laminate. Difficulties with maintaining a constant fibre volume fraction arise with infiltration of the thick-section solid laminate areas of the blade, for example the spar-caps and hub sections. EP 1 310 351 B1 and US 2003/0116262 A1 disclose methods of pre-placing thermoset pre-preg in these areas, that are then fully infiltrated by the resin infusion process. However, the achievement of a prescribed fibre volume fraction throughout the structure is critical to meeting the design requirements of a load bearing structure such as a wind turbine blade and this can be difficult to achieve using liquid resin infusion.

WO-A-00/54949 discloses a mould for moulding polymeric composites, the mould comprising a ceramic body having a plurality of heating elements and at least one layer of a fibre reinforcement embedded within it and a method of making a mould for moulding polymeric composites, the method comprising embedding a plurality of heating elements and at least one layer of a fibre reinforcement within a spreadable ceramic material.

Thus the skilled person will appreciate the difficulties associated with the known processes for the manufacture of composite articles. In particular, in the case of processes involving the use of a lay-up of dry materials, there are difficulties associated with accurate placement of the lay-up on the tool (mould) prior to processing.

Despite the prior art, there is therefore a need for an improved process for the manufacture of composite articles, such as wind turbine blades, for example. In particular there is a requirement for an improved one-shot process whereby a fully infiltrated and polymerised composite article, having the desired fibre volume fraction, such as a wind turbine blade, can be reliably produced.

It is therefore an object of the invention to provide an improved process for the manufacture of composite articles, in particular wind turbine blades, whereby the composite structure can be manufactured in a one-shot process.

### Summary of the invention

Thus in one aspect, the invention provides a method of making a mould for moulding polymeric composites, the method comprising embedding a plurality of heating elements and at least one layer of a fibre reinforced polymer within a spreadable ceramic material, the curing temperature of the ceramic material being less than the melting point of the polymer, curing the ceramic material at a temperature less than the melting point of the polymer to yield a solid ceramic body, and heating the ceramic body at a temperature above the melting point of the polymer.

The embodiment described herein incorporates electrical heating elements embedded within layers of a fibre reinforced polymer which is impregnated with a ceramic material. The curing temperature can be superior to 60°C, superior to 70°C, superior to 80°C or even superior to 90°C. Such curing temperatures can be obtained with a basic heating method like a tunnel in which a hot air flow is generated.

The step of embedding comprises:
(a) applying a first layer of the spreadable ceramic material to a mould pattern,
(b) applying a layer of the fibre reinforced polymer to the first layer,
(c) applying a second layer of the ceramic material to the fibre reinforced polymer and working it in,
(d) optionally repeating steps (a) to (c) one or more times,
(e) applying a layer of the heating elements to the exposed surface of the ceramic material, and
(f) covering the layer of heating elements with a further layer of the ceramic material.

The term "working it in" as used herein means applying pressure to the layer of ceramic material which is applied to the fibre reinforced polymer such that the ceramic material impregnates the polymer material and the majority of any trapped air is removed. The pressure may be applied by means of a roller for example. Alternatively, the pressure may be applied by means of a vacuum pressure applied across a vacuum bag for example, or by means of an autoclave to apply positive pressure across the vacuum bag for example. The skilled person will appreciate that any other suitable means of applying pressure may be used in order to ensure that the ceramic paste impregnates the fibre reinforced polymer.

Preferably, step (f) comprises repeating steps (a) to (c) at least once.

Suitably, the method further comprises the step of heating the mould to a temperature in the range 25 to 100°C for a period of time sufficient to dry the ceramic material. This step comprises a moisture elimination step whereby the ceramic material is dried and subsequently removed from the mould pattern. This is carried out by initially introducing a low level of electric power through the heating wires for a period of time necessary to dry out the ceramic. By carrying out the moisture elimination step the potential for any electric short-circuiting of the heating wires is avoided. The moisture elimination step is preferably carried out prior to heating the ceramic body to a temperature above the melting point of the polymer. The moisture elimination is advantageously carried out by switching on the heating elements of the mould. Use of large autoclaves or ovens can thereby be avoided.

The fibre reinforced polymer layer suitably comprises carbon fibres woven with fibres of the polymer. The fibre reinforced polymer layer may, alternatively, comprise glass, metal or basalt fibres, or mixtures thereof, woven with fibres of the polymer,

Alternatively, the fibre reinforced polymer layer may comprise carbon, glass, metal or basalt fibres on which polymer has been deposited. The polymer may be in solid form such as powders, granules or pellets, for example.

In the embodiment described herein, the fibre reinforced polymer layers consist of a commingled weave of bundles of dry carbon fibres together with fibres or strands of polyetheretherketone (PEEK). PEEK is particularly preferred for use in accordance with the present invention as it has a high glass transition temperature (Tg = 143°C) and melting temperature (343°C) which gives excellent mechanical properties at service temperatures up to 220°C, and gives medium mechanical properties between 220°C and 300°C. The particular advantage of using a polyetheretherketone (PEEK) polymer is that, once melted and fused to both the reinforcing fibres and the ceramic material, the resulting 3-component composite has excellent mechanical properties in the moulding temperature range of 170 to 220°C, and still possesses medium mechanical properties between 220 and 300°C. The addition of the PEEK adds substantial impact and fracture toughness to the ceramic tool, which would not be gained by simply reinforcing the ceramic tool with either glass or carbon fibres.

As the mechanical properties of the mould are strongly improved by such processes, these moulds can undergo much simpler heating profiles during their service life.

The polymer may alternatively comprise polyphenylene sulphide (PPS), polyetherimide (PEI) or polyetherketoneketone (PEKK).

In the case of polyetherimide (PEI) or polyetherketoneketone (PEKK) polymers, once melted and fused to both the reinforcing fibres and the ceramic material, the resulting 3-component composite has excellent mechanical properties in the moulding temperature range of 170 to 220°C, and still possesses medium mechanical properties between 220 and 300°C. In the case of polyphenylene sulphide (PPS) polymer, the mechanical properties of the 3-component composite has medium mechanical properties in the moulding temperature range of 170 to 220°C but would not be suitable for use at temperatures above 250°C. The use of either PEKK or PPS would also add to the fracture and impact toughness of the tool, with PEKK and PEEK giving the highest toughening effect.

To fuse the reinforcing fibres with the polymer fibres to form a structural composite requires that the material is brought above the melt temperature of the polymer to allow the polymer to impregnate and flow around the fibre bundles. In the case of PEEK this temperature is between 360°C and 390°C.

Subsequent to the melting of the polymer fibres, the mould heaters are switched off and the mould allowed to cool naturally, to room temperature, for example. During this cooling process the polymer solidifies and reverts to its original semicrystalline morphological structure. In the manufacture of moulds this high temperature requirement could not normally be met with the materials used in the construction of mould patterns. To overcome this difficulty, the ceramic material, in the form of a paste, is introduced between the commingled layers of carbon and PEEK fabric during the construction of the mould. This ceramic material, in this embodiment ceramic alkali aluminosilicate or calcium metasilicate, can be cured at a relatively low temperature of say 60°C which can easily be tolerated by the mould pattern. The use of a ceramic material which can be cured at such a low temperature is particularly advantageous since less expensive mould patterns can be used which are capable of tolerating such temperatures.

The preferred ceramic materials for use in the manufacture of the mould according to the invention can be termed "Geopolymers" and belong to a class of synthetic aluminosilicate materials. The skilled person will appreciate that other suitable ceramic materials could also be used in the manufacture of the mould according to the invention.

The function provided by the curing and consequent solidification of the ceramic material is that structural strength and rigidity is imparted to the mould prior to the fusing of the fibres and polymer. This degree of rigidity within the mould facilitates the removal of the mould from the pattern while preserving its integrity and form stability. Once the mould is removed from the pattern the integral heating is used to bring the mould temperature above the melt temperature of the polymer. When this is done the polymer melts and flows into and around the fibre bundles which imparts increased strength and stiffness to the mould structure. The polymer also protects the fibres from corrosion by the ceramic, such as can be experienced by glass fibres for instance in a ceramic matrix. The mould thus constructed from a composite of reinforcing fibres, a polymer and a ceramic, has an operating temperature up to 230°C and has high structural strength. This structural strength is in the order of 3.5 times that achievable with the ceramic material alone. It will be appreciated that the operating temperature of the mould will depend on the polymer used in the fibre reinforced polymer layer. The operating temperature of the mould may therefore be greater than 230°C, depending on the polymer used.

According to a second aspect of the present invention there is provided a mould for moulding polymeric composites, the mould comprising a ceramic body having a plurality of heating elements and at least one layer of a fibre reinforced polymer embedded within it.

The terms "mould" and "tool" as used herein, are used interchangeably and have the same meaning. The mould described herein is suitable for use for high temperature moulding of polymeric composites. The mould is particularly suitable for moulding of large composite articles, such as wind turbine blades or sections thereof, aeroplane fuselages and large automotive and transport panels, marine structures such as boat hulls, enclosures or containers.

Accordingly, in a further aspect, the invention provides a process for the manufacture of a composite article, said process comprising the steps of
(i) providing on a tool one or more layers of fibrous prepreg material in an amount sufficient to build up a desired lay-up of an article;
(ii) applying heat and a vacuum to said material; and
(iii) maintaining sufficient heat and vacuum in said tool for a period of time sufficient to form a composite article; characterized in that said lay-up is encapsulated in a sacrificial bag prior to step (ii).

The mould (tool) described herein which comprises a ceramic body having a plurality of heating elements and at least one layer of a fibre reinforced polymer embedded within it, is suitable for use in the above mentioned process for the manufacture of a composite article. The reinforced mould described is particularly suitable for use in the process described herein as it can be manipulated without collapsing. Another advantage of the reinforced mould is that it can be heated to the temperatures necessary to melt the sacrificial bag.

Thus, the invention also provides for the use of a mould as described herein in a process for the manufacture of a composite article, said process comprising the steps of
(i) providing on a tool (mould) one or more layers of fibrous prepreg material in an amount sufficient to build up a desired lay-up of an article;
(ii) applying heat and a vacuum to said material; and
(iii) maintaining sufficient heat and vacuum in said tool (mould) for a period of time sufficient to form a composite article; characterized in that said lay-up is encapsulated in a sacrificial bag prior to step (ii).

The process may further comprise the steps of
(a) providing one or more lay-ups comprising prepreg material;
(b) encapsulating each lay-up in a sacrificial bag and applying a vacuum; and
(c) placing the lay-ups together prior to step (ii), such that the sacrificial bag holds the prepreg material of each lay-up in place and melts on application of heat.

The sacrificial bag melts on application of heat. The sacrificial bag can mix with the resin of the prepreg material without causing any adverse effect to the mechanical properties of the composite article.

The present invention provides a one-shot process for the manufacture of composite articles from thermoset or thermoplastic prepreg materials. The use of prepreg materials allows the correct fibre volume fraction to be obtained throughout the entire structure of the blade. This is a significant advantage over the one-shot liquid moulding processes known in the art, where the local fibre volume fraction within a large structure depends on the control of a number of critical parameters such as resin temperature and viscosity, preform architecture, temperature ramp-up rates, maximum temperature, time at maximum temperature and vacuum pressure, during the filling and consolidation processes.

The person skilled in the art will appreciate that it can be difficult to control the lay-up of dry fibrous materials when processing a composite pre-preg material. The use of sacrificial bags, in accordance with the process according to the present invention, provides a means of accurately placing the materials on the mould (tool) until they are processed. The use of sacrificial bags can only be used with those types of pre-preg material where both the fibre and the resin are contained in the layers being laid up.

The sacrificial bag is used to maintain at least one layer of fibrous pre-preg material in place by applying vacuum. The tool can thereby be manipulated without adverse effects on the positioning of the material.

The term "sacrificial bag" as used herein is also intended to refer to a bag or layer that melts on application of heat. The sacrificial bag is preferably made out of inert plastic material. The sacrificial bag preferably mixes with the components of the composite lay-up. The sacrificial bag has preferably little or no adverse effect on the mechanical properties of the composite. The sacrificial bag can even improve the mechanical properties of the composite.

The bags used in accordance with the present invention are suitable for use in processes for the manufacture of both large and small composite articles, including wind turbine blades and or portions thereof. It will be appreciated that the bags can also be used in accordance with the process according to the invention to facilitate the processing of smaller complex parts such as small wind turbine blades or automotive components from dry pre-preg materials that are difficult to lay-up.

The sacrificial bags may comprise any suitable plastics material which has a melting point lower than the processing temperature of the composite pre-preg, and, wherein, when the material melts and mixes with the pre-preg material, it does not cause any adverse effect to the mechanical properties of the pre-preg, or it has little or no adverse effect on the mechanical properties of the pre-preg.

Suitably, the sacrificial bag comprises a semi-crystalline thermoplastic polymer with a melt temperature below 150°C.

The sacrificial bag may alternatively comprise an amorphous thermoplastic polymer with a glass-transition temperature below 125°C.

The sacrificial bag suitably comprises material selected from the group consisting of low density polyethylene (LDPE), polypropylene, ethylene vinyl acetate (EVA) material, and co-polymers thereof. The skilled person will appreciate that the sacrificial bag may comprise other suitable polymeric materials. The bag may comprise a suitable material that may improve the hardness or toughness of the blade.

The tool may be heated to a temperature in the range 170 to 400°C.

Suitably the tool is heated to a temperature in the range 170 to 210°C.

Suitably, the sacrificial bag has a melting point lower than the processing temperature of the prepreg.

The process according to the invention is particularly suitable for use with composite prepreg materials that require processing at 180°C or above this temperature.

In a preferred embodiment, the invention provides a process for the manufacture of a composite article, such as a wind-turbine blade, the process comprising the steps of
(i) providing a tool for forming a first and second portion of the article;
(ii) providing one or more layers of fibrous prepreg material on the tool to build up a desired lay-up of said first portion of the article;
(iii) placing a sacrificial bag on said lay-up and applying a vacuum to seal said lay-up to the tool; repeating steps (ii) and (iii) to form a desired lay-up of the second portion of said article;
(iv)placing the lay-up of said first portion of the article adjacent to the lay-up of the second portion of said article;
(v) applying heat and a vacuum to said tool; and
(vi) maintaining sufficient heat and vacuum in said tool for a period of time sufficient to form a composite article.

Preferably the tool comprises a ceramic body having a plurality of heating elements and at least one layer of a fibre reinforced polymer embedded within it.

It will be appreciated by the person skilled in the art that the process according to the invention could also be used for the manufacture of composite articles other than wind turbine blades.

The sacrificial bags can be used to aid the lay-up of different portions of a composite article. For example, the process according to the invention allows the top half of the blade, for example, to be laid up on the open mould (tool), encapsulated in the sacrificial bag and a vacuum applied between the bag and the mould to seal it. That half of the mould can then be rotated and placed on top of the other half without disturbing the layup. Thanks to the sacrificial bags, the blade can be produced in a one-shot process. The use of sacrificial bags does not prevent the formation of resin fronts at the junction of the two blade halves. Such a one-shot process does not require leaving any core in place between both halves. Thus, no cores need to be taken away at the end of the process. The cost of the process is thereby significantly lowered. The overall weight of the mould during the process is also reduced. Such a one-shot process does not require any resin infusion. The overall weight of the mould is also significantly reduced by the suppression of the infusion tooling. Thanks to the mould weight reduction, longer blades can be produced.

In a preferred embodiment, the process according to the invention further comprises the step of preparing at least one composite support means by means of (a) providing one or more layers of prepreg material and (b) one or more layers of foam material, whereby said layers are provided in an alternating manner to form a lay-up; and (c) encapsulating said lay-up in a sacrificial bag and applying a vacuum. The entire composite support means can then be transferred to the mould (tool) in one piece without disturbing the lay-up.

The composite support means suitably comprises a spar. The process may further comprise the step of placing the spar on the lay-up of the first portion of the article on the tool; placing a sacrificial bag over the spar and the lay-up of the first portion, and applying a vacuum prior to step (iv).

Therefore the process allows the first portion of the article (a blade, for example) to be laid up with the spars and other components in place and encapsulated in a sacrificial bag under vacuum which prevents movement of the lay-up and components during closing of the mould.

The process may further comprise the step of placing a vacuum bag adjacent to each side of the spar prior to step (iv). The vacuum bags suitably comprise nylon bags and give strength and support to the article during processing.

The non-sacrifical bag or vacuum bag is used to create a volume between it and the tool (mould) which contains the part layup. Evacuation of the air from this volume creates a consolidation pressure of up to 1 bar on the layup during the processing stage which is necessary to produce a good quality composite structure. The application of the vacuum also ensures that the layup maintains contact with the tool surface during processing and in so doing ensures that the final part conforms to the shape of the tool.

The term "pre-preg " as used herein means a fibrous material such as a carbon fibre, glass fibre, basalt fibre, metal fibre or other fibrous material that been pre-impregnated with a resin material, such as in-situ polymerisable thermoplastic material or thermoset or thermoplastic polymerised or pre-polymer material, for example, prior to laying up in a mould. The resin is generally in-situ between the fibres. The term pre-deposited means a fibrous material on which resin material has been deposited, for example, prior to laying up in a mould. The resin in this case may be on top of or on one side only of the fibres. The term "pre-impregnated material" should be taken to also include the pre-deposited material, and materials of these types may be referred to as pre-pregs.

The sacrificial bag is particularly suitable for use with thermoset prepreg. Indeed, sacrificial bags keep volatile organic components away from the environment. Thermoset resins can be distributed by an operator in powder, pellet or granule form over fibres without requesting specific air filtration.

The prepreg material may comprise any suitable thermoset or thermoplastic prepreg material. Thus, in a preferred embodiment, the present invention provides the use of a one-shot process for the manufacture of wind turbine blades from thermoset or thermoplastic prepreg materials. The thermoset or thermoplastic prepreg materials can be either polymerised or in pre-polymer form. Suitable thermoplastic materials include those described in European Patent Application No. 06076443.8.

Suitable thermoset materials include epoxy resins, unsaturated polyester resins, vinyl ester resins, thermoset polyurethane resins, phenolic resins, polyimide resins and silicone resins, for example.

Suitable resin materials for use in accordance with the present invention include cyclic poly(1,4-butylene terephthalate) (CBT), high temperature epoxies, polypropylene (PP), polyamide (PA), polyethylene terephthalate (PET) and polybutylene terephthalate (PBT).

The pre-preg material may be selected from the group consisting of cyclic poly(1,4-butylene terephthalate) (CBT) and glass fibre mat; epoxy and glass fibre or carbon fibre; and glass fibre reinforced polypropylene (PP), polyamide (PA), polyethylene terephthalate (PET) or polybutylene terephthalate (PBT).

Preferably the pre-preg comprises CBT and glass fibre mat. Cyclic poly(1,4-butylene terephthalate) (CBT) is an activated macrocyclic polyester oligomer, which when polymerised forms a PBT polymer such as described in many patents by Cyclics Corporation including, U.S. patent no. 6,369,157. A one-part CBT system generally comprises a blend of CBT together with a polymerisation catalyst. This is desirably in one-part solid form. The advantage of this one-part system is that it is not necessary to carry out a separate mixing step for the addition of catalyst.

Alternatively, the pre-preg may comprise a fibre reinforced sheet impregnated with a reactive heat curable thermoset resin, such as those marketed under the trade name PreTec EP by IQ Tec Germany GmbH. These pre-pregs may comprise thermoset resins such as FREOPOX resin, available from Freilacke and RESICOAT resin available from AKZO NOBEL. These pre-pregs are particularly suitable for use in accordance with the present invention as the reinforced mould described herein can be heated to temperatures above the processing temperature of these pre-pregs. The resins used in these prepregs are activated by application of heat, at temperatures typically above 180°C, and it is an advantage of the mould (tool) described herein, that this mould is sufficiently durable at temperatures above 180°C in order to process these prepregs. Moulds (tools) constructed using conventional thermoset prepregs materials would not have the thermal durability to process these pre-pregs. A further advantage of the invention is that these reactive heat curable thermoset resins do not exhibit an exothermic reaction during curing, thus making them particularly suitable for the rapid curing of thick-section composites, as found, for example, at the hub-end or in the spar caps of a large wind turbine blade. These thermoset resins also exhibit a very low viscosity when heated, which guarantees a very good resin distribution without requiring an infusion process. Moreover, the resin quantity can thereby be finely adapted in order to increase the fibre volume fraction of the composite.

The pre-preg material can either be prepared and laid-up on the tool or prepared offline. Suitably the prepreg is prepared by means of powder deposition process whereby the powder is spread on glass or carbon fibre, for example, heated and passed through rollers to squeeze powder into the fibre. The pre-pregs can then be placed on the tool and used to form the lay-ups for each portion of the article as necessary.

In the present invention the terms "large" or "larger" as applied to the composite articles relates to those articles or elements which are of a size that prior art techniques would normally construct in parts or sections. For example, above a certain size, sections of the article are generally constructed separately for later joining together and the integrity of the article is usually compromised along each join between the sections. Generally composite materials are constructed of components which combine to produce structural or functional properties not present in any individual component. For many applications it is the strength of the composite material which makes it an attractive material to employ. Compromising that strength makes the composite less suitable for its intended end-use. Typically such large or larger composite articles have at least one dimension (often times length) which is 5 metres or greater, for example 10 metres or greater, such as 15 metres or greater. With the present invention those large composite articles can be made without any distinct joint. With the present invention it is possible to create articles at least one dimension (often times length) which is 20, 25, 30, 35, 40, 45, 50, 55, 60, 65, 70, 75, 80 or 85 metres or greater.

Larger structural elements or objects are of particular interest though the present invention is not limited to those and can be employed for smaller objects. The terms structural element, composite article, and the like thus include all articles constructed of composite materials. Articles made from composite materials include, building elements, vehicle elements such as automobile panels and structures, marine structures such as boat hulls, aircraft elements such as wings and control surfaces. All of these articles can be manufactured using the composites of the present invention and by the processes of the present invention.

### Brief description of the drawings

The invention is described in more detail below by way of example with reference to the accompanying drawings in which:
Figure 1 is a perspective view of a mould according to the embodiment of the invention;
Figure 2 is a cross-sectional view of a portion of the mould shown in Figure 1;
Figure 3 is a section of a partially fabricated mould, illustrating the layout of heating tapes;
Figure 4 shows a lay-up of a spar encapsulated in a sacrificial bag;
Figure 5 shows the lay-up of each half of the blade in the upper and lower halves of the tool;
Figure 6 shows the lay-up of one half of the blade and a spar encapsulated in a sacrificial bag; and
Figure 7 shows a cross-section of the closed tool with the upper and lower halves of the blade and spar.

### Detailed description of the drawings

The invention therefore provides a reinforced mould (tool) suitable for high temperature moulding of polymeric composites; a process for the manufacture of the reinforced mould and a process for the manufacture of composite articles using the reinforced mould.

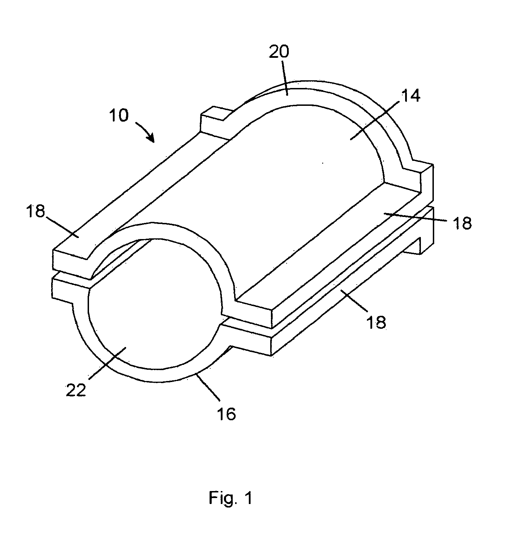

Figure 1 shows a mould 10 for use in moulding relatively large composite and/or plastics components such as wind turbine blades, sections of aeroplane fuselage, large automotive and transport panels or other large component which would generally be unsuitable for moulding using a metal mould and autoclave or oven combination.

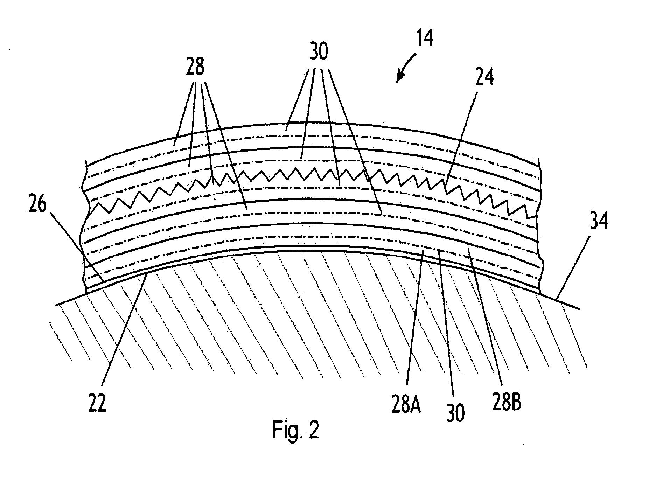

Such components will generally be at least two meters in length, or have a surface area of at least 5m². The mould 10 comprises two mould sections 14, 16. Each section 14, 16 includes a peripheral flange 18 to allow the sections 14, 16 to be securely and accurately located relative to one another. The flanges 18 may also act as a point at which to secure a frame (not shown) for supporting the sections 14, 16 during use in moulding. Each section 14, 16 may also include a flange 20 on one or both ends, to allow a particularly long mould 10 to be formed from two or more pairs of shorter sections 14, 16 clamped end-to-end. Each section 14, 16 is a body of ceramic material 28 (Figure 2) with layers 30 of carbon fibre reinforced polymer embedded in it.

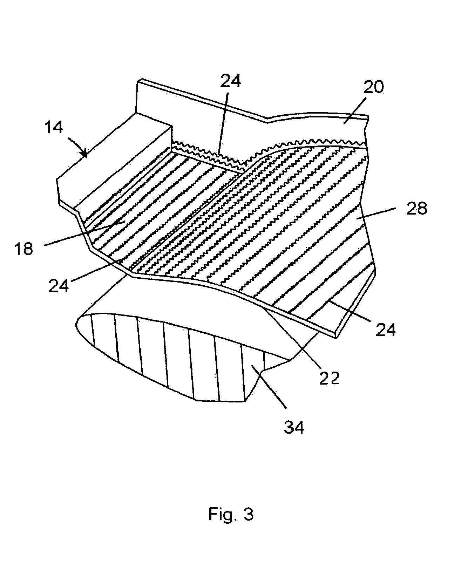

The mould 10 is particularly suited to the processing of materials which can be consolidated under vacuum, for example, thermoplastics and thermosetting composites. In Figure 1 the mould 10, and in particular its interior working surface 22, is shown having a substantially cylindrical cross section as would be the case for moulding, for example, the root of a wind turbine blade or a section of aeroplane fuselage. However, the working surface 22 can be of any desired shape according to the shape of the item to be moulded. For example, it could be substantially elliptical or aerofoil in cross section as shown in Figure 3, as would be the case for moulding the main length of a wind turbine blade.

Due to the relatively large size of the mould 10, it is not practical to heat it in an autoclave or oven or the like to cure the material being formed within the mould 10, as the size and therefore the cost and complexity of such an autoclave or oven would be prohibitive. Therefore the mould 10 is integrally heated by an array of heating elements or wires 24 embedded therein, Figures 2 and 3. Figure 2 is a cross-sectional view of a portion of the mould 10, and it is to be understood that this same cross section applies to all portions of the mould 10 which surround and define the working surface 22, and preferably also to the peripheral flanges 18 and the end flanges 20 if present. Figure 3 shows the upper section 14 in a partially fabricated state (the fabrication process is given below). The heating wires 24 preferably comprise a high temperature flexible metal heating element, and in particular a heating tape, for example as supplied under the trade name AMPTEK AWO standard insulated heating tape.

The heating wires 24 are located adjacent the working surface 22 of the mould 10 in order to heat the working surface 22, and therefore the material to be moulded, during use of the mould 10. The heating wires 24 heat the mould surface 22 and thus the material to bring it to a sufficiently soft state that it can conform, preferably under vacuum, to the shape of the working surface 22 in order to create the desired component. The spacing and orientation of the array of heating wires 24 is particularly important in order to achieve a desired heat distribution across the working surface 22, and in particular to allow different areas of the working surface 22 to be simultaneously heated to different temperatures. In this way the mould 10 is capable of matching the heat output at particular locations on the working surface 22 to the local thickness of the component being produced by the mould 10.

The mould 10 is fabricated as follows.
Step 1: A suitable blank or pattern 34 (Figures 2 and 3) is produced in the shape of the component to be moulded. The pattern 34, or at least its surface, is a material which is compatible with the materials used to form the mould 10. The pattern 34 is supported, for example on a workbench (not shown)
Step 2: The upper exposed surface of the pattern 34 is covered first with a mould release agent (not shown) and then with a gel coat layer 26. The mould release agent applied before the gel coat layer 26 ensures that, once the upper section 14 has suitably cured, it can be separated from the pattern 34 without damage to the upper section 14 (the upper section 14 of the mould is fabricated first, followed by the lower section 16). Preferred materials for the gel coat includes ceramic alkali aluminosilicate or calcium metasilicate, combined with a suitable lightweight glass surface tissue, such as a 30 grammes per square metre tissue. It will be appreciated that there are further ceramic materials that may be used, either individually or in combination.
Step 3: A layer 30 of fibre reinforced polymer fabric is then laid onto the ceramic paste layer 28A. The fabric 30 comprises a commingled weave of bundles of dry carbon fibres with fibres or strands of the polymer PEEK. A preferred material is Carbon/PEEK TPFL™ material from Schappe Techniques SA. This material is an intermingled 2D woven fabric 60/40% (Vf 53%), Satin-weave in 4, with an areal weight of 650grammes per square metre. PEEK melts at a temperature of 343°C.
Step 4: A further layer 28B of ceramic paste is applied and worked into the fabric 30 with a roller to fully impregnate the fabric with the ceramic paste and remove entrapped air. Finished layer thicknesses are typically around 1.5mm per layer.
Step 5: Steps 3 to 5 are repeated twice to build up a thick layer of ceramic paste 28 with embedded fibre layers 30.
Step 6: The heating elements 24 are applied as a layer to the exposed surface of the ceramic paste 28. The heating elements may be wire incorporated in so-called heating tape of the type supplied by Amptek of the United States. Predetermined lengths of the tape 24 are prepared in advance. The tape is cut from a roll, the ends prepared and the resistance confirmed. The lengths of tape 24 are correctly laid out on the ceramic paste 28 and pressed into the paste to ensure they maintain their position. At this stage a detailed sketch of the mould section and the layout of the heating tapes is prepared.
Step 7: Steps 3 to 5 are repeated twice more to further build up the thickness of ceramic paste 28 with embedded fibre layers 30, and to embed the heating tapes 24 in the structure. Overall thickness is in the range 10-20mm.
Step 8: After this the mould section is cured at 60°C overnight at which stage it is demoulded (removed from the pattern 34). The demoulding step can be carried out in a tunnel where hot air flow is generated. This step also has the advantage of helping to remove any moisture that may remain in the tool. Further heating to 100°C and above completely eliminates any residual moisture that remains.
Step 9: After demoulding, all the ends of the heating tapes 24 are located and labelled according to the sketch prepared earlier. The resistance of each heating tape is checked to ensure that all terminations are correct. The heating tapes are then connected to suitable external control circuitry. At this stage the mould section is ready for heating using the embedded heating system.
Step 10: The mould section is brought up to about 390°C to melt the polymer fibres and create a bond between the carbon fibres and the polymer. This bond greatly increases the structural strength of the mould, which is typically 3.5 times the strength achievable using the ceramic alone.

This completes the fabrication of the upper section 14. The pattern 34 is now turned over, so that the previous bottom side of the pattern is now uppermost, and the entire process is repeated to form the lower section 16.

The mould 10 is now ready to be put into use to produce a desired component, for example a wind turbine blade, which may be 12 metres or more long. Components of such dimensions are not suitable for manufacture by conventional moulding techniques, which require the mould to be heated in an autoclave or oven or the like, in order to facilitate the processing and consolidation of the polymeric composite material from which such wind turbine blades are conventionally manufactured.

The heating wires 24 are preferably adapted to generate a temperature at the working surface 22 of from 100°C to 500°C. The exact temperature will depend on the nature of the material to be processed in the mould 10. For example, thermoplastic matrix materials such as polypropylene and polyamide 6, polyamide 12, polyamide 11 and polybutylene terephthalate may be processed at temperatures between 180°C and 240°C. Thermoset matrix materials such as polyesters and epoxies may be processed below 200°C. Other thermoplastic materials such as polyethylene terephthalate may be processed between 250°C and 300°C. Other thermoplastic polymers such as polyphenylene sulphide, polyetherimide, polyetheretherketone and polyetherketoneketone can be processed between 300°C and 400°C.

The electrical power rating for the heating means 24 will typically be in the range of 5 kW/m² to 30 kW/m² of working surface 22, but can of course be varied to suit the particular production rate required, and also the thickness or local thickness of material to be processed. The wattage density can also be locally varied in order to suit local variations of thickness and type of material to be processed locally within the mould 10. This is one of the major benefits of using the array of heating wires 24, whose heat output can be individually varied, or varied in pre-defined groups, in order to customise the heat output to exactly match the specifications of the component being moulded. To this end, each individual heating wire 24 or alternatively groups of heating wires 24 can be provided with dedicated electrical terminals (not shown) which therefore allow this differential heating of the working surface 22.

The invention also provides a single cure cycle (one-shot) process for the manufacture of composite articles such as wind turbine blades. The reinforced mould described herein is particularly suitable for the one-shot process described. This aspect of the invention is described with reference to the manufacture of a large wind turbine blade but it will be appreciated that the invention is not limited to wind turbine blades and other articles constructed of composite may be made.

The following example demonstrates the process according to an aspect of the invention for the manufacture of a wind turbine blade. The reinforced mould according to the invention can be used to make the composite article.

### EXAMPLE

In this example, a CBT thermoplastic wind turbine blade was manufactured according to the process of the invention, using pre-preg formed from CBT and glass fibre mat. The skilled person will appreciate that blades or blade sections of various sizes could be manufactured using the process according to the invention.

In this example, the process used to manufacture the prepreg was powder deposition where the CBT or the Epoxy powder was spread on top of the fibre mat heated and passed through rollers to squeeze the powder into the fibre. It will be appreciated that commercially available prepregs comprising suitable resin material may also be used.

The following stages were involved in the production of the blade :
- Material Preparation
- Tool preparation
- Lay-up support
- Materiallay-up
- Heating cycle

### Material Preparation:

In the embodiment described, the blade section is made up of the following raw materials:
CBT 160 powder supplied by Cyclics Corporation
0°/90° glass fibre with an areal weight of 1152g/m², supplied by Ahlstrom Glassfibre
+/-45° glass fibre with an areal weight of 600g/m², supplied by Ahlstrom Glassfibre
PET foam from Fagerdala Hicore, density of 1 10kg/m³

**Table 1 provides details of the material lay up used for a 12.6m blade Table 1.**

| | **Root end (mm)** | **Tip end (mm)** | **Material** |
|---|---|---|---|
| Skins | 7 | 3.4 | +/- 45° glass |
| Spar caps | 10.8 | 10 | 0°/90° glass |
| Spar | 3 | 3 | +/- 45° glass |
| Foam spar | 10 | 10 | PET |
| Foam skins | 15 | 10 | PET |

In the embodiment described herein by way of example, approximately fourteen layers of +/-45⁰ pre-preg were needed to prepare the skins at the root end of the blade section. Approximately seven layers of pre-preg were required towards the tip end of the blade section. For the lower half of the blade the skins were extended approximately 100mm on each side to allow for overlaps. The spar caps required eleven layers of prepreg at the root end and ten layers towards the tip end. The PET foam was cut for both webs (spars) and for the skins. The lay-ups form the skins of the blade.

### Lay-up support:

The process according to the invention enables a blade section to be processed in a single shot. A lay-up comprising layers of glass fibre CBT resin pre-preg and foam was prepared.

The first step involved in constructing the blade lay-up was to place glass fibre CBT prepreg into the lower half of the tool (mould). The amount of glass fibre used determines the thickness of the lay-up.

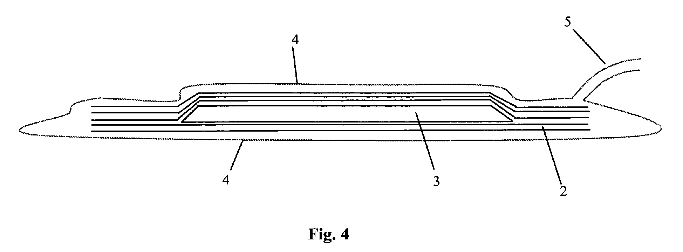

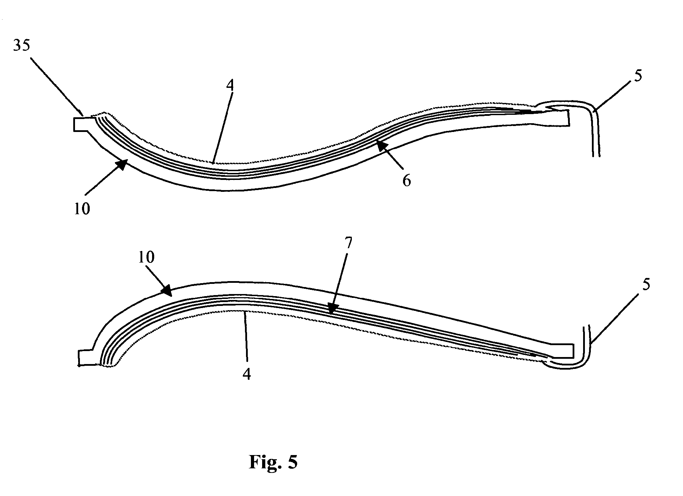

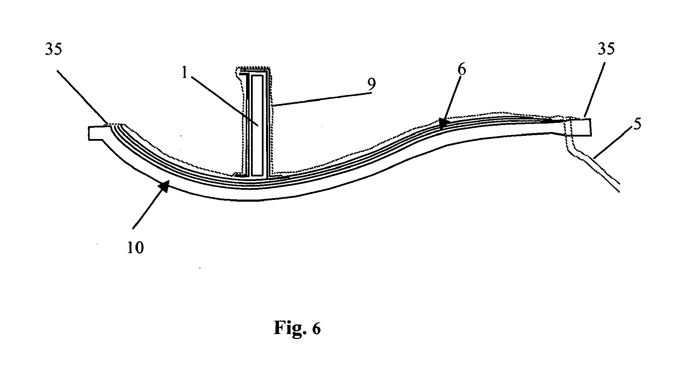

The next step involved the preparation of the spars 1. As shown in Figure 4, these were constructed using layers of pre-preg 2 and PET Foam 3. The composite lay-up was then enclosed in a sacrificial bag 4 and vacuum applied. The vacuum was applied by means of vacuum line 5. Figure 5 shows the lay-up 6, 7 of each half of the blade in the upper 14 and lower 16 halves of the tool 10, with a sacrificial bag 4 applied over each of the lay-ups 6, 7. With reference to Figure 6, the layup of the spar 1 was then placed on top of the pre-preg 6 in the lower half of the tool 10 and another sacrifical bag 9 was placed over the spar 1 and the pre-preg 6. The bag 9 was sealed to the mould (tool) edge 35 and vacuum applied. All elements of the layup were then locked in place by the vacuum.

The same procedure was carried out to prepare the upper half of the tool.

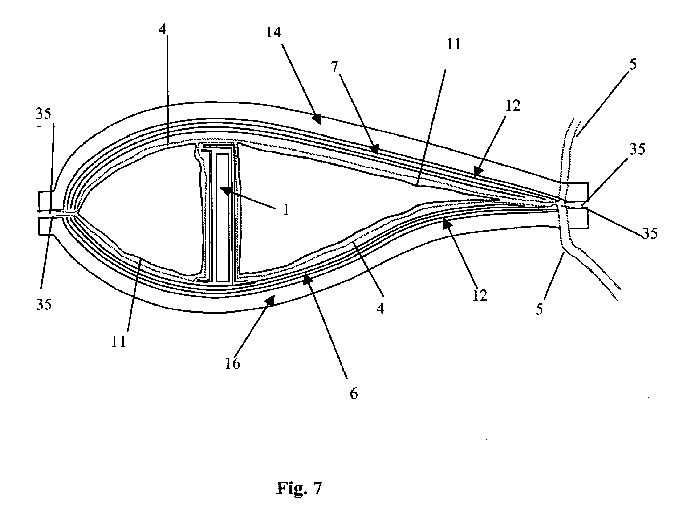

With reference to Figure 7, nylon vacuum bags 11 were placed on both sides of the spar 1 on the lower 16 half of the tool 10 prior to closing the tool. The upper 14 half of the tool 10 was then rotated and placed on top of the lower 16 half of the tool. The nylon vacuum bags 11 were joined together at the ends and sealed to the tool 10. A vacuum was applied. The system was checked to ensure that there were no leaks. The lay-up was then ready for processing.

When the mould (tool) 10 is closed and the high temperature nylon vacuum bags 11 are placed inside, vacuum is applied between the mould 10 and the vacuum bag, which then locks all the component parts in place for processing. The sacrificial bags are no longer required and melt, as the temperature increases, allowing the different parts such as the spars 1 and the skins 12 to fuse together into one part. The use of the vacuum bag(s) allows a volume to be created between the bag(s) and the tool (mould) which contains the part layup. Evacuation of the air from this volume creates a consolidation pressure of up to 1bar on the layup during the processing stage. The pressure is necessary to produce a good quality composite structure. The application of the vacuum also ensures that the layup maintains contact with the tool surface during processing and in so doing ensures that the final part conforms to the shape of the tool. In addition and with reference to Figure 7, the space occupied by the spar 1, is also subjected to vacuum pressure between the two vacuum bags 11. This vacuum pressure acts to provide consolidation for the spar.

### Heating Cycle:

A combination of tool heating and internal air heating was used to heat the entire layup to an appropriate temperature. The preferred temperature is in the range 170 °C to 210 °C. As the layup heated the sacrificial bag melted and became incorporated into the CBT thus removing any barrier between the spar 1 and the skins 12 and allowing the top and bottom skins to fuse together. When the material was fully polymerised, the structure was allowed to cool at an appropriate rate so as to ensure structural integrity.

The words "comprises/comprising" and the words "having/including" when used herein with reference to the present invention are used to specify the presence of stated features, integers, steps or components but does not preclude the presence or addition of one or more other features, integers, steps, components or groups thereof.

The invention is not limited to the embodiments described herein which may be modified or varied without departing from the scope of the invention. It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method of making a mould (10) for moulding polymeric composites, the method comprising embedding a plurality of heating elements (24) and at least one layer of a fibre reinforced polymer (30) within a spreadable ceramic material (28), the curing temperature of the ceramic material being less than the melting point of the polymer, curing the ceramic material at a temperature less than the melting point of the polymer to yield a solid ceramic body, and heating the ceramic body at a temperature above the melting point of the polymer.

2. The method claimed in claim 1, wherein the step of embedding comprises:
(a) applying a first layer of the spreadable ceramic material (28A) to mould pattern (34),
(b) applying a layer of the fibre reinforced polymer (30) to the first layer,
(c) applying a second layer of the ceramic material (28B) to the fibre reinforced polymer and
(d) optionally repeating steps (a) to (c) one or more times,
(e) applying a layer of the heating elements (24) to the exposed surface of the ceramic material, and
(f) covering the layer of heating elements with a further layer of the ceramic material (28).

3. The method claimed in claim 2, wherein step (f) comprises repeating steps (a) to (c) at least once.

4. The method claimed in claim 1, 2, or 3, wherein the fibre reinforced polymer layer (30) comprises carbon, glass, metal or basalt fibres, or mixtures thereof, woven with fibres of the polymer.

5. The method claimed in claim 1, 2 or 3, wherein the fibre reinforced polymer layer (30) comprises carbon fibres woven with fibres of the polymer.

6. The method claimed in any one of claims 1, 2 or 3, wherein the fibre reinforced polymer layer (30) comprises carbon, glass, metal or basalt fibres on which polymer has been deposited.

7. The method claimed in any one of claims 1 to 6 wherein the polymer is selected from the group consisting of polyetheretherketone (PEEK), polyphenylene sulphide (PPS), polyetherimide (PEI) and polyetherketoneketone (PEKK).

8. The method according to any one of claims 1 to 7, further comprising the step of heating the mould to a temperature in the range 25 to 100°C for a period of time sufficient to dry the ceramic material.

9. A mould for moulding polymeric composites, the mould comprising a ceramic body having a plurality of heating elements (24) and at least one layer of a fibre reinforced polymer (30) embedded within it.

10. The mould claimed in claim 9, wherein the fibre reinforced polymer layer (30) comprises carbon fibres woven with fibres of the polymer.

11. The mould claimed in claim 9 wherein the fibre reinforced polymer layer (30) comprises carbon, glass, metal or basalt fibres, or mixtures thereof, woven with fibres of the polymer.

12. The mould claimed in claim 9 wherein the fibre reinforced polymer layer (30) comprises carbon, glass, metal or basalt fibres on which polymer has been deposited.

13. The mould claimed in any one of claims 9 to 12 wherein the polymer is selected from the group consisting of polyetheretherketone (PEEK), polyphenylene sulphide (PPS), polyetherimide (PEI) and polyetherketoneketone (PEKK).

14. Use of a mould according to any one of claims 9 to 13 in a process for the manufacture of a composite article, said process comprising the steps of:
(i) providing on a tool, mould (10), one or more layers of fibrous prepreg material (2) in an amount sufficient to build up a desired lay-up of an article;
(ii) applying heat and a vacuum to said material; and
(iii) maintaining sufficient heat and vacuum in said tool, mould, for a period of time sufficient to form a composite article; wherein said lay-up is encapsulated in a sacrificial bag (4) prior to step (ii).

15. Use according to claim 14, wherein said process further comprises the steps of
(a) providing one or more lay-ups comprising prepreg (2) material;
(b) encapsulating each lay-up in a sacrificial bag (4) and applying a vacuum; and
(c) placing the lay-ups together prior to step (ii), such that the sacrificial bag holds the prepreg material of each lay-up in place and melts on application of heat;
and optionally wherein the prepreg material comprises a thermoset or thermoplastic prepreg material, for example wherein said prepreg material is selected from the group consisting of cyclic poly(1,4-butylene terephthalate) (CBT) and glass fibre mat; epoxy and glass fibre or carbon fibre; and glass fibre reinforced polypropylene (PP), polyamide (PA), polyethylene terephthalate (PET) or polybutylene terephthalate (PBT).

## Patentansprüche

1. Verfahren zur Herstellung einer Form (10) zum Gießen von Polymeren Verbundstoffen, dieses Verfahren umfassend : die Integration einer Pluralität Heizelemente (24) und mindestens einer Schicht einer faserverstärkten Polymers (30) in einer keramischen Material (28) die verteilt werden kann, die Kochtemperatur des keramischen Material (ist niedriger als der Schmelzpunkt des Polymers; die Kurierung von das keramischen Material bei einer Temperatur unter dem Schmelzpunkt des Polymer um einen fester keramischen Körper zu geben ; und die Heizung der keramischen Körper bei einer Temperatur die höher ist als der Schmelzpunkt des Polymers.

2. Verfahren wie in Anspruch 1, worin der Schritt der Integration umfasst :
(a) die Anwendung einer ersten Schicht des keramischen Materials (28A) an einem Formmuster (34),
(b) die Anwendung einer Schicht des faserverstärkten Polymers (30) an der ersten Schicht,
(c) die Anwendung einer zweiten Schicht des keramischen Materials (28B) am faserverstärkten Polymer und die Bearbeitung davon,
(d) die beliebige Wiederholung, eine oder mehrere Male, von Schritte (a) zu (c)
(e) die Anwendung einer Schicht des Heizelemente (24) auf der Oberfläche des keramischen Materials,
(f) die Abdeckung der Schicht der Heizelemente mit einer weiteren Schicht keramischen Material (28).

3. Verfahren wie in Anspruch 2, worin Schritt (f) umfasst die Wiederholung der Schritte (a) bis (c), mindestens einmal.

4. Verfahren, wie in Anspruch 1, 2 oder 3, worin die Schicht des faserverstärkten Polymers (30) Kohle-, Glas-, Metall- oder Basaltfaser oder Mischungen dieser Fasern umfasst, gewebt mit Fasern des Polymers.

5. Verfahren wie in Anspruch 1, 2 oder 3, worin die Schicht des faserverstärkte Polymers (30) Kohlefaser gewebt mit Fasern des Polymers umfasst.

6. Verfahren wie in irgendwelche Ansprüche 1, 2 oder 3 worin die Schicht des faserverstärkten Polymers (30) Kohle-, Glas-, Metall- oder Basaltfaser umfasst, an dem ein Polymer eingereicht wurde.

7. Verfahren wie in Ansprüche 1 bis 6, worin das Polymer ausgewählt ist unter der Gruppe bestehend aus Polyetheretherketon (PEEK), Polyphenylensulfid (PPS), Polyetherimid (PEI) und Polyether Keton Keton (PEKK).

8. Verfahren wie in Ansprüche 1 bis 7, weiter umfassend ein Schritt der Heizung der Form zu einer Temperatur in der Strecke 25 bis 100 °C während eines Zeitabschnitts das genügend ist um das keramische Material zu trocknen.

9. Form zur Gießen von Polymeren Verbundstoffen, der Form umfassend einen keramischen Körper mit eine Pluralität Heizelemente (24) und mindestens eine Schicht eines innerhalb eingebettet faserverstärkten Polymer (30).

10. Form wie in Anspruch 9, worin die Schicht des faserverstärkten Polymers (30) Kohlefaser gewebt mit Fasern des Polymers umfasst.

11. Form wie in Anspruch 9, worin die Schicht des faserverstärkten Polymers (30) Kohle-, Glas-, Metall- oder Basaltfaser oder Mischungen dieser Fasern umfasst, gewebt mit Fasern des Polymers.

12. Form wie in Anspruch 9, worin die Schicht des faserverstärkten Polymers (30) Kohle-, Glas-, Metall- oder Basaltfaser umfasst, an dem ein Polymer eingereicht wurde.

13. Form wie in Ansprüche 9 bis 12, worin das Polymer ausgewählt ist unter der Gruppe bestehend aus Polyetheretherketon (PEEK), Polyphenylensulfid (PPS), Polyetherimid (PEI) und Polyether Keton Keton (PEKK).

14. Verwendung einer Form wie in Ansprüche 9 bis 13 in einem Verfahren für die Herstellung von einem zusammengesetzten Artikel, sagte Verfahren umfassend die Schritte:
(i) zur Verfügung stellen, auf einem Werkzeug oder Form (10), einer oder mehrere Schichten faserig prepreg-Materials (2), in einer Menge die genügend ist um ein gewünschte Überlagerung von einem Artikel aufzubauen;
(ii) Anwendung von Hitze und Vakuum bei den genannten Material; und
(iii) Beibehaltung genügende Hitze und Vakuum im sagte Werkzeug oder Form, während eines Zeitabschnitts genügend um einen zusammengesetzten Artikel zu bilden; worin sagte Überlagerung vor der Schritte (ii) in einer geopferten Tasche (4) eingekapselt wird.

15. Verwendung nach Anspruch 14, worin sagte Verfahren weiter folgende Schritte enthalt :
(a) zur Verfügung stellen einer oder mehrere Überlagerungen umfassend prepreg-Material (2);
(b) einkapseln jeder Überlagerung in einer geopferten Tasche (4) und ein Vakuum anwenden; und
(c) vor der Schritte (ii), die Überlagerungen um gemeinsam Platz lagern, damit der geopferten Tasche die prepreg-Materials von jede Überlagerungen an Stelle erhaltet und in einer Anwendung von Hitze geschmolzen werden;
und, optional, worin das Prepreg-Material eine duroplastischen oder thermoplastischen Prepreg-Material umfasst, worin sagte Prepreg-Material zum Beispiel ausgewählt ist unter die Gruppe bestehend aus zyklische poly(1,4-butylene terephtalate) (CBT) und Glasfaser ; Epoxidharz und Glasfaser oder Kohlefaser ; und Glasfaser verstärktes Polypropylen (PP), Polyamid (PA), Polyethylenterephthalat (PET) oder Polybutylenterephthalat (PBT).

## Revendications

1. Procédé de fabrication d'un moule (10) pour mouler des composites polymères, le procédé consistant à intégrer, à l'intérieur d'un matériau céramique (28) pouvant être étalé, une pluralité d'éléments chauffants (24) et au moins une couche d'un polymère (30) renforcé par des fibres, la température de cuisson du matériau céramique étant inférieure au point de fusion du polymère, à cuire le matériau céramique à une température inférieure au point de fusion du polymère, pour donner un corps en céramique solide, et à chauffer le corps en céramique à une température supérieure au point de fusion du polymère.

2. Procédé comme revendiqué dans la revendication 1, dans lequel l'étape d'intégration consiste :
(a) à appliquer sur un modèle de moule (34), une première couche du matériau céramique (28A) pouvant être étalé,
(b) à appliquer sur la première couche, une couche du polymère (30) renforcé par des fibres,
(c)à appliquer sur le polymère renforcé par des fibres, une deuxième couche du matériau céramique (28B) et à la faire pénétrer,
(d) éventuellement, à répéter une ou plusieurs fois les étapes (a) à (c),
(e) à appliquer une couche des éléments chauffants (24) sur la surface exposée du matériau céramique, et
(f) à recouvrir la couche d'éléments chauffants, avec une autre couche du matériau céramique (28).

3. Procédé comme revendiqué dans la revendication 2, dans lequel l'étape (f) comprend la répétition des étapes (a) à (c), au moins une fois.

4. Procédé comme revendiqué dans la revendication 1, 2 ou 3, dans lequel la couche du polymère (30) renforcé par des fibres comprend des fibres de carbone, de verre, métalliques ou de basalte, ou bien des mélanges de ces fibres, tissées avec des fibres du polymère.

5. Procédé comme revendiqué dans la revendication 1, 2 ou 3, dans lequel le polymère (30) renforcé par des fibres comprend des fibres de carbone tissées avec des fibres du polymère.

6. Procédé comme revendiqué dans l'une quelconque des revendications 1, 2 ou 3, dans lequel la couche du polymère (30) renforcé par des fibres comprend des fibres de carbone, de verre, métalliques ou de basalte, sur lesquelles un polymère a été déposé.

7. Procédé comme revendiqué dans l'une quelconque des revendications 1 à 6, dans lequel le polymère est sélectionné parmi le groupe se composant de polyéther éther cétone (PEEK), de sulfure de polyphénylène (PPS), de polyétherimide (PEI) et de polyéther cétone cétone (PEKK).

8. Procédé selon l'une quelconque des revendications 1 à 7, comprenant en outre l'étape consistant à chauffer le moule à une température se situant dans la plage comprise entre 25°C et 100°C, pendant une période de temps suffisante pour sécher le matériau céramique.

9. Moule prévu pour mouler des composites polymères, le moule comprenant un corps en céramique ayant une pluralité d'éléments chauffants (24) et au moins une couche d'un polymère (30) renforcé par des fibres et intégré à l'intérieur dudit corps.

10. Moule comme revendiqué dans la revendication 9, dans lequel la couche du polymère (30) renforcé par des fibres comprend des fibres de carbone tissées avec des fibres du polymère.

11. Moule comme revendiqué dans la revendication 9, dans lequel la couche du polymère (30) renforcé par des fibres comprend des fibres de carbone, de verre, métalliques ou de basalte, ou bien des mélanges de ces fibres, tissées avec des fibres du polymère.

12. Moule comme revendiqué dans la revendication 9, dans lequel la couche du polymère (30) renforcé par des fibres comprend des fibres de carbone, de verre, métalliques ou de basalte, sur lesquelles un polymère a été déposé.

13. Moule comme revendiqué dans l'une quelconque des revendications 9 à 12, dans lequel le polymère est sélectionné parmi le groupe se composant de polyéther éther cétone (PEEK), de sulfure de polyphénylène (PPS), de polyétherimide (PEI) et de polyéther cétone cétone (PEKK).

14. Utilisation d'un moule selon l'une quelconque des revendications 9 à 13, dans un procédé pour la fabrication d'un article composite, ledit procédé comprenant les étapes consistant :
(i) à fournir sur un outil ou moule (10), une ou plusieurs couches d'un matériau préimprégné (2) fibreux, en quantité suffisante pour constituer une superposition de couches, souhaitée, d'un article ;
(ii) à appliquer de la chaleur et un vide sur ledit matériau ; et
(iii) à maintenir une chaleur et un vide suffisants dans ledit outil ou moule, pendant une période de temps suffisante pour former un article composite ; procédé dans lequel ladite superposition de couches est enrobée dans un sac sacrifié (4) avant l'étape (ii).

15. Utilisation selon la revendication 14, dans laquelle ledit procédé comprend en outre les étapes consistant :
(a) à fournir une ou plusieurs superpositions de couches comprenant le matériau préimprégné (2) ;
(b) à enrober chaque superposition de couches dans un sac sacrifié (4) et à appliquer un vide ; et
(c)à placer ensemble les superpositions de couches avant l'étape (ii), de manière telle que le sac sacrifié maintienne en place le matériau préimprégné de chaque superposition de couches et soit en fusion lors d'une application de chaleur ;
et, éventuellement, procédé dans lequel le matériau préimprégné comprend un matériau préimprégné thermodurcissable ou thermoplastique, et dans lequel, par exemple, ledit matériau préimprégné est sélectionné parmi le groupe se composant de poly(1,4-butylène téréphtalate) cyclique (CBT) et d'un matériau en fibres de verre ; de résine époxy et de fibre de verre ou de fibre de carbone ; et de polypropylène (PP), de polyamide (PA), de polyéthylène téréphtalate (PET) ou de polybutylène téréphtalate (PBT), renforcés par des fibres de verre.
